# EUROPEAN PATENT SPECIFICATION

(11) **EP 2 381 597 B1**
(45) Date of publication and mention of the grant of the patent: **31.05.2017**
(21) Application number: 10290213.7
(22) Date of filing: 21.04.2010
(51) Int. Cl.: H04B 17/391

(54) **Test setup and method for hardware fading simulations**
Prüfanordnung und Verfahren für Hardwareschwund-Simulationen
Configuration d'un test et procédé pour des simulations hardware d'évanouissement

(43) Date of publication of application: 26.10.2011
(73) Proprietor: ALCATEL LUCENT, 92100 Boulogne-Billancourt (FR)
(72) Inventor: Hoek, Cornelis, 71732 Tamm (DE)
(74) Representative: Wetzel, Emmanuelle

(56) References cited:
- EP-A1- 1 881 624
- DAVID WAKE ET AL: "A comparison of remote radio head optical transmission technologies for next generation wireless systems" LEOS ANNUAL MEETING CONFERENCE PROCEEDINGS, 2009. LEOS '09. IEEE, IEEE, PISCATAWAY, NJ, USA, 4 October 2009 (2009-10-04), pages 442-443, XP031572557 ISBN: 978-1-4244-3680-4

## Description

### Field of the Invention

The invention relates to the field of telecommunications, and, more specifically, to a test setup for hardware fading simulations, and to a corresponding method.

### Background

This section introduces aspects that may be helpful in facilitating a better understanding of the invention. Accordingly, the statements of this section are to be read in this light and are not to be understood as admissions about what is in the prior art or what is not in the prior art.

Hardware fading simulators are used for testing mobile communication systems under realistic channel conditions. In recently developed communications systems, e.g. in compliance with the LTE advanced standard, base stations and mobile stations with an increasing number of antennas and with cooperation between multiple base stations and mobiles stations are used. Standard hardware fading simulation units typically comprise a number of RF inputs and RF outputs and perform down-conversion from an RF frequency level to an intermediate frequency (IF) level or to the baseband (BB) level in order to perform the fading simulation, and subsequent up-conversion back to the RF frequency level. Moreover, when both uplink and downlink need to be simulated, additional duplexers and two separate fading simulators for the uplink and the downlink will be required.

Now, if the standard architecture of the fading simulator as described above will be used for up-to-date communication systems like LTE advanced, the complexity and thus the cost will increase by an order of magnitude due to the high cost of the conversions from the RF band to the baseband, from the baseband to the RF band and due to the cost of the duplex filters.

Some of these costs may be avoided by performing part of the tests with software simulations. However, these software simulations are very time-consuming and cannot exactly simulate the real-time hardware. Thus, the use of hardware fading simulations in general cannot be avoided.

EP 1 881 624 A1 discloses a system and method for low complexity frequency hopping simulation for communication device performance testing. The system comprises a baseband processing module having a channel generator module for simulating a channel profile, including fading. The baseband processing module is connected to an RF processing module via a communication link. The RF processing module is adapted to generate a downlink test signal to be received by a test device. The test device generates an uplink signal which is provided to a baseband module for conversion to a baseband signal.

### Summary

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

One aspect of the invention relates to a test setup for baseband fading simulations, comprising: a base station for generating at least one baseband signal, a remote radio head for generating at least one RF signal from the at least one baseband signal, the remote radio head being adapted to provide both up-conversion and down-conversion between a baseband frequency band of the at least one baseband signal and an RF frequency band of the at least one RF signal, and a baseband fading simulation unit arranged in a bi-directional baseband signal path between the base station and the remote radio head, the base station and the remote radio head both having the same number of channels, and the baseband fading simulation unit being adapted to perform baseband fading simulations both for an uplink and for a downlink.

As indicated above, the main cost of standard hardware (HW) fading simulators using RF inputs and RF outputs is due to the duplex filters, the down-conversion (DC) from RF to baseband and the up-conversion (UC) from baseband to RF. Also, the phase and amplitude calibration of the analog parts is typically difficult to implement. The basic idea of the invention is that if the base station uses a remote radio head (RRH), it will be possible to shift the location of the hardware fading simulator from between the base station antenna connector and the mobile station antenna connector to a location in the baseband signal path between the baseband part of the base station and the remote radio head.

In this way, the same functionality may be provided without the need for duplex filters, as the baseband signal path is always bi-directional irrespective of the number of inputs and outputs of the channel matrix between RRHs and user equipments. Moreover, additional up- and down-converters may be dispensed with, as their functionality is taken over by the remote radio heads, or possibly by other equipment being arranged in the signal path from the baseband fading simulator to the remote radio head.

In one embodiment, the test setup further comprises: at least one user equipment connected to at least one RF port, in particular to an RF antenna connector port, of the remote radio head. The antenna connector(s) of the user equipment are connected either directly or via an additional attenuator to the RF antenna port(s) of the RRH(s) which are normally used for providing a connection to the respective transmit/receive antenna(s). In this way, the user equipment / mobile station is made part of the test setup for simulating the fading conditions of channel(s) to/from the user equipment. Thus, apart from the baseband fading simulation unit, only standard equipment is required for the test setup, considerably reducing the cost for providing such a test setup.

In another embodiment, the bi-directional baseband signal path between the base station and the remote radio head is a digital signal path. Typically, the baseband signal is generated in the form of a digital signal in the baseband part of the base station and is converted to an analog signal in a digital-to-analogue converter, typically provided in the remote radio head. It will be understood that the RRH is normally an active device, having one or more power amplifiers for amplification of the analog signals before providing them to the RF outputs for performing RF transmissions.

In a further embodiment, an interface of the baseband fading simulation unit to the bi-directional baseband signal path is in compliance with the Common Public Radio Interface Protocol (CPRI) standard. For the bidirectional connection between the baseband part of a base station and the RRH, the CPRI standard has been developed by Ericsson AB, Huawei Technologies, NEC Corporation, Nortel Networks Ltd, Alcatel-Lucent and Nokia Siemens Networks. Thus, by using inputs and outputs for the baseband fading simulation unit which are in compliance with the CPRI standard, the baseband fading simulation unit may support a large variety of different types of base stations and remote radio heads.

In yet another embodiment, the test setup further comprises: a further base station, and a further remote radio head, the baseband fading simulator being (also) arranged in a further bi-directional baseband signal path between the further base station and the further remote radio head. As indicated above, in future wireless communication standards, cooperation between multiple base stations and mobiles stations will be established. Thus, it is desirable to connect one and the same fading simulation unit to two (or more) baseband signal paths in parallel, thus allowing to perform fading simulations also for cooperative MIMO transmission schemes.

In one improvement, the test setup further comprises: at least one further user equipment connected to an RF output, in particular to an RF antenna connector output, of the further remote radio head. By connecting user equipments to RRHs associated with different base stations, it is possible to establish a test setup which may be used for testing the channel fading behaviour e.g. for cooperative MIMO schemes having a channel matrix involving two or more base stations and two or more user equipments.

Another aspect of the invention relates to a method for performing baseband fading simulations, the method comprising: performing the baseband fading simulations both for an uplink and for a downlink in a baseband fading simulation unit arranged in a bi-directional baseband signal path between a base station for generating at least one baseband signal and a remote radio head, the base station and the remote radio head both having the same number of channels, the remote radio head being adapted for generating at least one RF signal from the at least one baseband signal and to provide both up-conversion and down-conversion between a baseband frequency band of the at least one baseband signal and an RF frequency band of the at least one RF signal.

As indicated above, by shifting the position of the fading simulator from a location between the RRH and the user equipment(s) to a location between the baseband part of the base station and the RRH, the use of duplexers and additional up/down-conversion units may be dispensed with.

In one variant, the method further comprises: connecting at least one user equipment to an RF port, in particular to an RF antenna connector port, of the remote radio head. The number of antennas of a specific user equipment corresponds to the number of RF antenna ports of the RRH which will be occupied by that user equipment. It will be understood that for an example with e.g. eight RF antenna ports provided at the RRH, there are several possibilities for providing the connection to the user equipments: For instance, two user equipments, each with four antennas, may be connected to the RRH. Alternatively, four user equipments, each with two antennas, or eight user equipments, each with a single antenna, may be plugged into the respective RF antenna ports of the RRH.

In another variant, the method further comprises: using a digital signal path as a bi-directional baseband signal path between the base station and the remote radio head. As no analog hardware is needed, it is easy to use the same hardware fading simulation unit for a large number of channels with a low number of taps per channel or for a smaller number of channels with a higher number of taps per channel.

In a further variant, the method comprises: using an interface from the baseband fading simulation unit to the bi-directional baseband signal path which is in compliance with the Common Public Radio Interface, CPRI, protocol standard, thus providing a versatile interface which may be used in combination with different types of base stations.

In yet another variant, the method further comprises: arranging the baseband fading simulator also in a parallel further bi-directional baseband signal path between a further base station and a further remote radio head, thus allowing to simulate fading conditions of a channel matrix extending over two or more base stations.

In one improvement, the method further comprises: connecting at least one further user equipment to an RF output, in particular to an RF antenna connector output, of the further remote radio head. In this way, channel conditions for multi-user MIMO with user equipments served by different base stations / arranged in different cells may be tested.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Figures

Exemplary embodiments are shown in the diagrammatic drawing and are explained in the description below. The following are shown:
- **Fig. 1a**: shows a schematic diagram of a test setup with a hardware fading simulation unit arranged between an RF output of a remote radio head and a user equipment,
- **Fig. 1b**: shows a schematic diagram of a further test setup with a fading simulation unit arranged in an RF path between two remote radio heads and two user equipments, and
- **Fig. 2**: shows a schematic diagram of an embodiment of a test setup according to the invention having a baseband fading simulation unit connected with two parallel baseband paths from two base stations to two RRHs.

### Description of the Embodiments

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

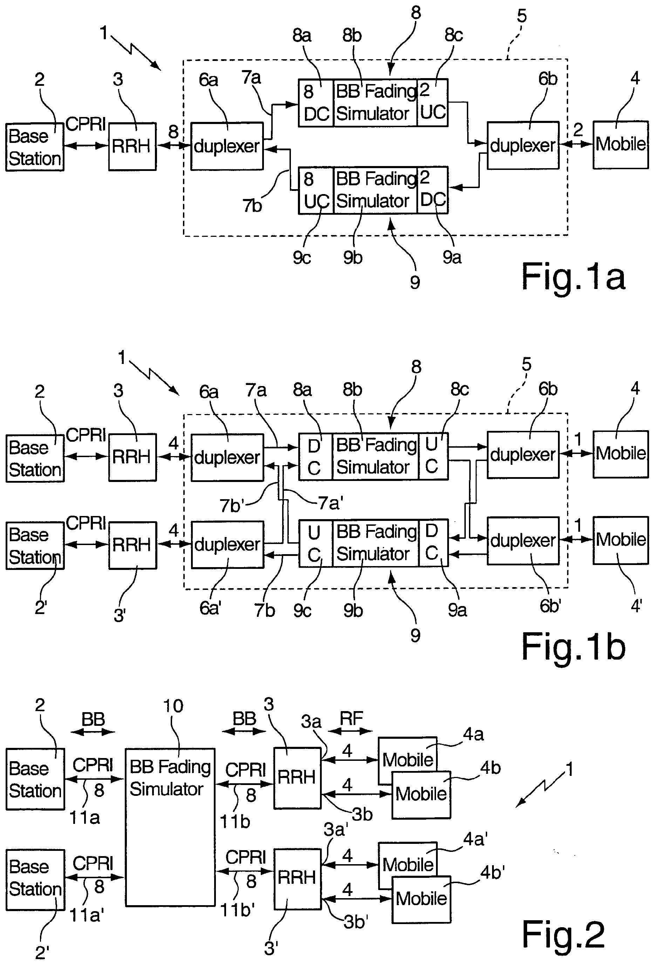

In **Fig. 1a****,** a conventional test setup 1 for hardware fading simulation is shown. The test setup 1 comprises a base station 2, resp., a baseband part thereof which generates a baseband signal being provided to a remote radio head 3 which is connected to the base station 2 via cabling. For establishing the connection, both the base station 2 and the remote radio head 3 have an (internal) CPRI interface, being in compliance with the CPRI standard. The remote radio head 3 comprises eight (indicated by the number "8" in Fig. 1a) antennas for radio communications with a user equipment 4 over an air interface. In the present example, the user equipment 4 is a mobile station which comprises two (indicated by the number "2" in Fig. 1a) antennas, such that an eight times two (8 x 2) channel matrix may be established for communications between the base station 2 and the user equipment 4.

For testing the fading behaviour of the 8 x 2 channels established between the remote radio head 3 and the user equipment 4, an RF fading simulation unit 5 is connected to an RF interface (antenna connector) of the remote radio head 3 and a corresponding RF interface (antenna connector) of the user equipment 4. The RF fading simulation unit 5 is bidirectional and comprises an input duplexer unit 6a and an output duplexer unit 6b with an overall number of 10 duplex filters for dividing the RF signal path into a downlink path 7a and an uplink path 7b, respectively.

In the downlink path 7a, a downlink RF fading simulation unit 8 is arranged for simulating the fading behaviour of the 8 x 2 downlink channel to the user equipment 4. The downlink RF fading simulation unit 8 comprises a down-conversion unit 8a for down-conversion of the eight RF downlink channels received from the RRH 3 to a baseband frequency range. The down-converted channels are provided to a baseband fading simulator 8b which performs the (hardware) fading simulation at the baseband level. An up-conversion unit 8c is then used for subsequent up-conversion of the two output channels of the fading simulation unit 8 to the RF domain.

In a similar way, an uplink RF fading simulation unit 9 simulates the 2 x 8 uplink channel matrix and comprises a down-conversion unit 9a for down-conversion of the two RF uplink channels from the user equipment 4 to the baseband level, a baseband fading simulator 9b, and an up-conversion unit 9c for providing eight uplink RF channels to the input duplexer unit 6a.

**Fig. 1 b** shows a configuration similar to the one of Fig. 1 a, being used for fading simulations of a channel matrix resulting from communications of two base stations 2, 2' with two mobile stations 4, 4', using a fading simulation unit 5 for interconnection thereof which is capable of simulating an 8 x 2 channel matrix. Due to the limited number of RF inputs and RF outputs of the fading simulation unit 5, the number of base station antennas has to be reduced to four and the number of user equipment antennas to one (indicated in Fig. 1 b by "4" and "1", respectively).

As the RF inputs and RF outputs of the fading simulation unit 5 are now shared between two base stations 2, 2' and two mobile stations 4, 4', in the downlink, two 8 x 1 channels have to be simulated. Likewise, in the uplink, two 2 x 4 channels have to be simulated. Respective input duplexers 6a, 6a' and output duplexers 6b, 6b' are provided in the fading simulation unit 5 for attribution of the downlink channels to/from the downlink fading simulation unit 8 via two parallel downlink paths 7a, 7a' and for attribution of the uplink channels to/from the uplink fading simulation unit 9 via two parallel uplink paths 7b, 7b'.

Using the fading simulation unit 5 of the examples of Fig. 1 a,b for fading simulations with a number N of base station antennas (e.g. N = 16) and a corresponding number of N = 16 user equipment antennas, i.e. for simulating a channel matrix with 16 inputs and 16 outputs, four times the equipment of Fig. 1a,b with some added combiner for simulating four times 16 x 1 channels in the downlink and four times 4 x 4 channels in the uplink will be required.

A solution which drastically reduces the number of components as compared to the configurations shown in Fig. 1a,b is shown in **Fig. 2****.** In this configuration of the test setup, the (hardware) baseband fading simulation unit 10 (e.g. a circuit board) is inserted between the base stations 2, 2' and the corresponding RRHs 3, 3' which communicate with each other using the CPRI interface (for exchanging digital baseband signals BB). To be more precise, the baseband fading simulation unit 10 is arranged in a first baseband signal path 11 a, 11 b between a first base station 2 and its corresponding first remote radio head 3, and a parallel second baseband signal path 11 a', 11 b' between a second base station 2' and a corresponding second remote radio head 3'.

In the present example, the two base stations 2, 2' generate a total of sixteen digital baseband signals which are provided to the baseband fading simulation unit 10. Likewise, the two RRHs 3, 3' have a corresponding total number of sixteen RF antenna outputs. The RRHs 3, 3' provide both the up-conversion and the down-conversion between the baseband frequency band of the baseband signals BB and the RF frequency band of the RF signals which are provided to the mobile stations 4a, 4b, 4a', 4b'. In the example of Fig. 2, it is supposed that each mobile station 4a, 4b, 4a', 4b' has four antennas, such that a total of four mobile stations 4a, 4b, 4a', 4b' may be connected to the two RRHs 3, 3', each mobile station 4a, 4b, 4a', 4b' being connected to a respective number of four RF antenna connector ports 3a, 3b, 3a', 3b' of a respective remote radio head 3, 3'. It will be understood, however, that if the mobile stations 4a, 4b, 4a', 4b' have a different number of antennas (e.g. 1, 2, or 8) then a total of 16, 8, or 2 mobile stations may be connected to the two RRHs 3, 3'.

In the configuration shown in Fig. 2, the baseband fading simulation unit 10 is bidirectional and does not require any duplexer filters. This is due to the fact that the fading simulation unit 10 is arranged between the base stations 2, 2' and the RRHs 3, 3', which both have the same number of channels, as the RRHs 3, 3' are used for up/down-conversion of the baseband signals BB generated by the base stations 2, 2'. Moreover, as the RRHs 3, 3' serve as up/down conversion units, in the configuration of Fig. 2, a total of 32 duplex filters, 32 up-converters, and 32 down-converters may be saved as compared to the configuration of Figs. 1a,b. Also, the synchronisation and calibration effort of the standard configuration which would be required for a large number of hardware fading simulators may be avoided.

In summary, insertion of a baseband fading simulation unit 10 between at least one base station and at least one RRH provides the same functionality as the solutions shown in Figs. 1 a,b, but avoids expensive duplex filters, up-conversion and down-conversion. Thus, a significant cost reduction may be achieved, as the most expensive components of the fading simulator are not required anymore. In addition, the fading simulator is more flexible, as the maximum size of the channel matrix is no longer limited by the amount of RF inputs and outputs. Also, due to the arrangement of the fading simulation unit 10 in a digital signal path, no calibration and synchronization problems exist.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Also, the description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Test setup (1) for baseband fading simulations, comprising:
a base station (2) for generating at least one baseband signal (BB),
a remote radio head (3) for generating at least one RF signal (RF) from the at least one baseband signal (BB), the remote radio head (3) being adapted to provide both up-conversion and down-conversion between a baseband frequency band of the at least one baseband signal (BB) and an RF frequency band of the at least one RF signal (RF), and
a baseband fading simulation unit (10) arranged in a bi-directional baseband signal path (11 a, 11 b) between the base station (2) and the remote radio head (3), the base station (2) and the remote radio head (3) both having the same number of channels, and the baseband fading simulation unit (10) being adapted to perform baseband fading simulations both for an uplink and for a downlink.

2. Test setup according to claim 1, further comprising: at least one user equipment (4a, 4b) connected to at least one RF port, in particular to an RF antenna connector port (3a, 3b), of the remote radio head (3).

3. Test setup according to claim 1 or 2, wherein the bi-directional baseband signal path (11 a, 11 b) between the base station (2) and the remote radio head (3) is a digital signal path.

4. Test setup according to any one of the preceding claims, wherein an interface of the baseband fading simulation unit (10) to the bi-directional baseband signal path (11 a, 11 b) is in compliance with the Common Public Radio Interface (CPRI) protocol standard.

5. Test setup according to any one of the preceding claims, further comprising:
a further base station (2'), and
a further remote radio head (3'), the baseband fading simulator (10) being also arranged in a further bi-directional baseband signal path (11 a', 11 b') between the further base station (2') and the further remote radio head (3').

6. Test setup according to claim 5, further comprising: at least one further user equipment (4a', 4b') connected to an RF port, in particular to an RF antenna connector port (3a', 3b'), of the further remote radio head (3').

7. Method for performing baseband fading simulations, the method comprising:
performing the baseband fading simulations both for an uplink and for a downlink in a baseband fading simulation unit (10) arranged in a bi-directional baseband signal path (11 a, 11 b) between a base station (2) for generating at least one baseband signal (BS) and a remote radio head (3), the base station (2) and the remote radio head (3) both having the same number of channels, the remote radio head (3) being adapted for generating at least one RF signal (RF) from the at least one baseband signal (BB) and to provide both up-conversion and down-conversion between a baseband frequency band of the at least one baseband signal (BB) and an RF frequency band of the at least one RF signal (RF).

8. Method according to claim 7, further comprising:
connecting at least one user equipment (4a, 4b) to an RF port, in particular to an RF antenna connector port (3a, 3b), of the remote radio head (3).

9. Method according to claim 7 or 8, further comprising: using a digital signal path as a bi-directional baseband signal path (11 a, 11b) between the base station (2) and the remote radio head (3).

10. Method according to any one of claims 7 to 9, further comprising:
using an interface of the baseband fading simulation unit (10) to the bi-directional baseband signal path (11 a, 11 b) which is in compliance with the Common Public Radio Interface (CPRI) protocol standard.

11. Method according to any one of claims 7 to 10, further comprising:
arranging the baseband fading simulation unit (10) in a further bi-directional baseband signal path (11 a', 11 b') between a further base station (2') and a further remote radio head (3').

12. Method according to claim 11, further comprising:
connecting at least one further user equipment (4a', 4b') to an RF port, in particular to an RF antenna connector port (3a', 3b') of the further remote radio head (3').

## Patentansprüche

1. Versuchsaufbau (1) für Basisbandfading-Simulationen, umfassend:
eine Basisstation (2) zum Generieren mindestens eines Basisbandsignals (BB),
einen entfernt angeordneten Funkkopf (3) für das Generieren mindestens eines Funkfrequenzsignals (Radio Frequency, RF) auf der Grundlage des mindestens einen Basisbandsignals (BB), wobei der entfernt angeordnete Funkkopf (3) ausgelegt ist für das Bereitstellen sowohl von Upconversion als auch von Downconversion zwischen einem Basisband-Frequenzband mindestens eines Basisbandsignals (BB) und einem RF-Frequenzband des mindestens einen RF-Signals (RF), und eine Basisbandfading-Simulationseinheit (10) die angeordnet ist in einem bidirektionalen Basisband-Signalpfad (11a, 11 b) zwischen der Basisstation (2) und dem entfernt angeordneten Funkkopf (3), wobei die Basisstation (2) und der entfernt angeordnete Funkkopf (3) jeweils über dieselbe Anzahl von Kanälen verfügen und wobei die Basisbandfading-Simulationseinheit (10) ausgelegt ist für das Durchführen von Basisbandfading-Simulationen sowohl für einen Uplink als auch für einen Downlink.

2. Versuchsaufbau nach Anspruch 1, weiterhin umfassend: mindestens ein Benutzergerät (4a, 4b), welches mit mindestens einem RF-Eingang verbunden ist, und zwar konkret mit einem RF-Antennenkonnektoreingang (3a, 3b) des entfernt angeordneten Funkkopfes (3).

3. Versuchsaufbau nach Anspruch 1 oder 2, wobei der bidirektionale Basisbandsignalpfad (11a, 11b) zwischen der Basisstation (2) und dem entfernt angeordneten Funkkopf (3) ein digitaler Signalpfad ist.

4. Versuchsaufbau nach einem jeglichen der vorgenannten Ansprüche, wobei eine Schnittstelle der Basisbandfading-Simulationseinheit (10) mit dem bidirektionalen Basisbandsignalpfad (11a, 11b) den Protokollstandard Common Public Radio Interface (CPRI) erfüllt.

5. Versuchsaufbau nach einem beliebigen der vorstehenden Ansprüche, weiterhin umfassend:
eine weitere Basisstation (2'), und
einen weiteren entfernt angeordneten Funkkopf (3'), wobei der Basisbandfading-Simulator (10) auf einem weiteren bidirektionalen Basisbandsignalpfad (11a', 11 b') zwischen der weiteren Basisstation (2') und dem weiteren entfernt angeordneten Funkkopf (3') angeordnet ist.

6. Versuchsaufbau nach Anspruch 5, weiterhin umfassend: mindestens ein weiteres Benutzergerät (4a', 4b'), welches mit einem RF-Eingang verbunden ist, und zwar konkret mit einem RF-Antennenkonnektoreingang (3a', 3b') des weiteren entfernt angeordneten Funkkopfes (3').

7. Verfahren zur Durchführung von Basisbandfading-Simulationen, wobei das Verfahren umfasst:
das Durchführen von Basisbandfading-Simulationen sowohl für einen Uplink als auch für einen Downlink in einer Basisbandfading-Simulationseinheit (10), die in einem bidirektionalen Basisbandsignalpfad (11 a, 11 b) zwischen einer Basisstation (2) zum Generieren mindestens eines Basisbandsignals (BS) und einem entfernt angeordneten Funkkopf (3) angeordnet ist, wobei die Basisstation (2) und der entfernt angeordnete Funkkopf (3) beide dieselbe Anzahl von Kanälen haben, wobei der entfernt angeordnete Funkkopf (3) ausgelegt ist für das Generieren mindestens eines RF-Signals (RF) auf der Grundlage des mindestens einen Basisbandsignals (BB) und für das Bereitstellen sowohl von Upconversion als auch von Downconversion zwischen einem Basisband-Frequenzband des mindestens einen Basisbandsignals (BB) und einem RF-Frequenzband des mindestens einen RF-Signals (RF).

8. Verfahren nach Anspruch 7, weiterhin umfassend:
das Verbinden mindestens eines Benutzergeräts (4a, 4b) mit einem RF-Eingang, und zwar konkret mit einem RF-Antennenkonnektoreingang (3a, 3b) des entfernt angeordneten Funkkopfes (3).

9. Verfahren nach Anspruch 7 oder 8, weiterhin umfassend: die Benutzung eines digitalen Signalpfads als bidirektionalen Basisbandsignalpfad (11a, 11 b) zwischen der Basisstation (2) und dem entfernt angeordneten Funkkopf (3).

10. Verfahren nach einem jeglichen der Ansprüche 7 bis 9, weiterhin umfassend: die Benutzung einer Schnittstelle der Basisbandfading-Simulationseinheit (10) mit dem bidirektionalen Basisbandsignalpfad (11a, 11b), welche den Protokollstandard Common Public Radio Interface (CPRI) erfüllt.

11. Verfahren nach einem jeglichen der Ansprüche 7 bis 10, weiterhin umfassend: das Anordnen der Basisbandfading-Simulationseinheit (10) in einem weiteren bidirektionalen Basisbandsignalpfad (11a', 11 b') zwischen einer weiteren Basisstation (2') und einem weiteren entfernt angeordneten Funkkopf (3').

12. Verfahren nach Anspruch 11, weiterhin umfassend:
das Verbinden mindestens eines weiteren Benutzergeräts (4a', 4b') mit einem RF-Eingang, und zwar konkret mit einem RF-Antennenkonnektoreingang (3a', 3b') des weiteren entfernt angeordneten Funkkopfes (3').

## Revendications

1. Installation d'essai (1) destinée à des simulations d'évanouissement en bande de base, comprenant :
une station de base (2) destinée à générer au moins un signal en bande de base (BB),
une tête radio distante (3) destinée à générer au moins un signal RF (RF) à partir de l'au moins un signal en bande de base (BB), la tête radio distante (3) étant adaptée pour fournir à la fois une conversion par élévation de fréquence et une conversion par abaissement de fréquence entre une bande de fréquence en bande de base de l'au moins un signal en bande de base (BB) et une bande de fréquence RF de l'au moins un signal RF (RF), et
une unité de simulation d'évanouissement en bande de base (10) disposée sur un chemin de signal en bande de base bidirectionnel (11 a, 11b) entre la station de base (2) et la tête radio distante (3), la station de base (2) et la tête radio distante (3) ayant toutes deux le même nombre de canaux, et l'unité de simulation d'évanouissement en bande de base (10) étant adaptée pour réaliser des simulations d'évanouissement en bande de base à la fois pour une liaison montante et pour une liaison descendante.

2. Installation d'essai selon la revendication 1, comprenant en outre: au moins un équipement utilisateur (4a, 4b) connecté à au moins un port RF, en particulier à un port de connecteur d'antenne RF (3a, 3b), de la tête radio distante (3).

3. Installation d'essai selon la revendication 1 ou 2, dans laquelle le chemin de signal de bande de base bidirectionnel (11a, 11 b) entre la station de base (2) et la tête radio distante (3) est un chemin de signal numérique.

4. Installation d'essai selon l'une quelconque des revendications précédentes, dans laquelle une interface de l'unité de simulation d'évanouissement en bande de base (10) vers le chemin de signal de bande de base bidirectionnel (11a, 11 b) est conforme à la norme de protocole CPRI (Common Public Radio Interface).

5. Installation d'essai selon l'une quelconque des revendications précédentes, comprenant en outre :
une autre station de base (2'), et
une autre tête radio distante (3'), le simulateur d'évanouissement en bande de base (10) étant aussi disposé sur un autre chemin de signal en bande de base bidirectionnel (11a', 11b') entre l'autre station de base (2') et l'autre tête radio distante (3').

6. Installation d'essai selon la revendication 5, comprenant en outre : au moins un autre équipement utilisateur (4a', 4b') connecté à un port RF, en particulier à un port de connecteur d'antenne RF (3a', 3b'), de l'autre tête radio distante (3').

7. Procédé de réalisation de simulations d'évanouissement en bande de base, le procédé comprenant l'étape suivante :
réaliser les simulations d'évanouissement en bande de base à la fois pour une liaison montante et pour une liaison descendante dans une unité de simulation d'évanouissement en bande de base (10) disposée sur un chemin de signal de bande de base bidirectionnel (11a, 11b) entre une station de base (2) destinée à générer au moins un signal en bande de base (BS) et une tête radio distante (3), la station de base (2) et la tête radio distante (3) ayant toutes deux le même nombre de canaux, la tête radio distante (3) étant adaptée pour générer au moins un signal RF (RF) à partir de l'au moins un signal en bande de base (BB) et pour fournir à la fois une conversion par élévation de fréquence et une conversion par abaissement de fréquence entre une bande de fréquence en bande de base de l'au moins un signal en bande de base (BB) et une bande de fréquence RF de l'au moins un signal RF (RF).

8. Procédé selon la revendication 7, comprenant en outre l'étape suivante:
connecter au moins un équipement utilisateur (4a, 4b) à un port RF, en particulier un port de connecteur d'antenne RF (3a, 3b), de la tête radio distante (3).

9. Procédé selon la revendication 7 ou 8, comprenant en outre l'étape suivante:
utiliser un chemin de signal numérique comme chemin de signal en bande de base bidirectionnel (11a, 11 b) entre la station de base (2) et la tête radio distante (3).

10. Procédé selon l'une quelconque des revendications 7 à 9, comprenant en outre l'étape suivante :
utiliser une interface de l'unité de simulation d'évanouissement en bande de base (10) vers le chemin de signal en bande de base bidirectionnel (11a, 11b) qui est conforme à la norme de protocole CPRI (Common Public Radio Interface).

11. Procédé selon l'une quelconque des revendications 7 à 10, comprenant en outre l'étape suivante :
disposer le simulateur d'évanouissement en bande de base (10) sur un autre chemin de signal en bande de base bidirectionnel (11 a', 11b') entre une autre station de base (2') et une autre tête radio distante (3').

12. Procédé selon la revendication 11, comprenant en outre l'étape suivante:
connecter au moins un autre équipement utilisateur (4a', 4b') à un port RF, en particulier à un port de connecteur d'antenne RF (3a', 3b') de l'autre tête radio distante (3').
